# FASCICULE DE BREVET EUROPEEN

(11) **EP 3 017 967 B1**
(45) Date de publication et mention de la délivrance du brevet: **30.12.2020**
(21) Numéro de dépôt: 15193803.2
(22) Date de dépôt: 10.11.2015
(51) Int. Cl.: B60C 19/00, B60C 7/00, B60C 7/12, B60B 19/00, B60C 3/06

(54) **PNEUMATIQUE AGRICOLE**
LANDWIRTSCHAFTSREIFEN
AGRICULTURAL TYRE

(30) Priorité: 10.11.2014 FR 1460861
(43) Date de publication de la demande: 11.05.2016
(73) Titulaire: OTICO, 77650 Chalmaison (FR)
(72) Inventeur: PHELY, Olivier, 77520 THENISY (FR); PIOU, Denis, 89340 VILLEBLEVIN (FR)
(74) Mandataire: Cabinet Netter

(56) Documents cités:
- EP-A1- 1 238 824
- EP-A1- 2 789 477
- FR-A- 1 472 799
- US-A- 452 001
- US-A1- 2004 089 209

## Description

L'invention concerne les outils agricoles en général, et en particulier les outils destinés à équiper un semoir.

Un semoir comprend généralement plusieurs outils disposés les uns à la suite des autres : au moins un outil de tête, typiquement un soc, un disque ou une dent, agencé pour ouvrir un sillon dans le sol ; un outil intermédiaire, agencé pour placer une semence ou une graine au fond du sillon ; un ou plusieurs outils de queue qui ferment le sillon et/ou tassent la terre à proximité du sillon.

On s'intéresse ici plus particulièrement aux outils capables de fermer le sillon, en partie au moins.

Les semoirs peuvent être utilisés sur des terrains bruts, c'est-à-dire sur lesquels la terre n'a pas été préalablement travaillée. Dans ce cas, la terre peut être sèche et friable, et/ou le sol jonché de déchets tels que des restes de culture ou des racines, ce qui complique le fonctionnement du semoir. On utilise alors des outils spécifiques, capables d'opérer dans ces conditions difficiles. Ces derniers sont généralement conçus pour être très rigides. Pour la fermeture du sillon, on utilise classiquement comme outil un ensemble rotatif de griffes métalliques.

Lorsqu'un outil de ce type rencontre une portion de terrain humide ou collant, les griffes sont souillées et l'outil devient pratiquement inefficace.

Des pneumatiques connus sont décrits dans les documents EP 1238824 A, US 2004/0089209 A et EP 2789477 A.

La Demanderesse s'est fixé comme objectif d'améliorer la situation.

Elle propose un pneumatique selon la revendication 1, ledit pneumatique étant non gonflable pour outil agricole du type comprenant une semelle, une bande de roulement, et une paire de flancs reliant la semelle à la bande de roulement. Un premier de ces flancs s'étend de la semelle à la bande de roulement. Le second comprend une portion interne qui s'étend de la semelle à la bande de roulement et une portion externe en saillie de la bande de roulement. Le premier flanc et la bande de roulement sont agencés de manière à maintenir conjointement la portion externe du second flanc dans le prolongement de la portion interne.

Le pneumatique proposé est capable de pénétrer les sols durs. Il permet de travailler les terrains bruts. À l'usage, le pneumatique proposé permet de se dispenser de nettoyage et/ou labourage du terrain avant d'y débuter une nouvelle culture.

La portion externe forme une partie plus rigide du pneumatique, capable de pénétrer le sol. En particulier, ceci rend le pneumatique en question robuste et utilisable pour refermer des sillons, y compris sur terrain brut. Le reste du pneumatique, au contraire, est assez souple, ce qui facilite son nettoyage, en particulier en favorisant le décollage de la terre.

Le pneumatique proposé se déforme généralement lors du roulage tandis que sa portion externe reste maintenue dans son orientation initiale, ce qui permet de briser les couches superficielles du terrain, et d'y pénétrer.

Le pneumatique est adapté aux terrains collants, par exemple où la terre est humide. La terre qui pourrait y adhérer se trouve décollée par les mouvements de déformation. En bref; le pneumatique proposé présente un caractère autonettoyant absent des outils classiques.

La bande de roulement du pneumatique proposé peut servir de jauge de profondeur : elle suit les dénivelés du terrain de manière que la portion externe du pneumatique pénètre la terre sur une profondeur sensiblement constante. Ceci permet de se passer des roues de jauge qui sont classiquement adjointes aux outils de queue.

Le pneumatique proposé présente un double comportement dynamique : localement, une résistance à la déformation pour agir sur la terre solide, et globalement une malléabilité qui réduit le risque d'accumulation de cette terre.

Selon un second aspect de l'invention, la Demanderesse propose un outil agricole comprenant au moins une roue incluant un corps de roue et un pneumatique tel que défini ci-avant et monté autour du corps de roue.

La roue peut être montée à rotation autour d'un axe, l'axe étant incliné d'un angle non nul par rapport au sol et/ou incliné d'un angle non droit par rapport à la direction d'avancée de l'outil agricole. Les directions d'application des forces de la roue vers le sol peuvent être adaptées en fonction des conditions du terrain.

L'outil agricole peut comprendre au moins deux roues incluant chacune un corps de roue et un pneumatique monté autour du corps de roue. Chacune des deux roues est montée à rotation de sorte que son axe de rotation respectif soit incliné d'un angle non nul par rapport au sol.

Les deux roues peuvent être agencées symétriquement l'une à l'autre par rapport à un plan médian, de sorte que le premier flanc de chaque roue soit dirigé vers le plan médian. Les deux portions externes poussent chacune la terre latéralement dans des directions orientées l'une vers l'autre. Cette configuration est particulièrement efficace pour fermer des sillons.

Les deux roues peuvent être agencées symétriquement l'une à l'autre par rapport à un plan médian, de sorte que le second flanc de chaque roue soit dirigé vers le plan médian. Les deux portions externes appuient chacune la terre sensiblement à la verticale. Cette configuration est particulièrement efficace pour fermer des sillons en en raclant les parois.

Le pneumatique proposé et/ou l'un au moins des pneumatiques équipant l'outil agricole proposé peut présenter les caractéristiques optionnelles suivantes, seules ou en combinaison les unes avec les autres :
- La portion externe est rigide tandis que le premier flanc et la bande de roulement sont souples. Le comportement opposé de ces deux parties du pneumatique, réalisé d'un seul tenant, augmente les performances de la partie externe du second flanc pour la pénétration de la terre tandis que la bande de roulement et le premier flanc évacuent plus facilement la terre qui tend à s'accumuler sur les surfaces extérieures du pneumatique.
- La portion externe comprend des dents réparties en sa périphérie. Chaque dent se comporte de manière sensiblement indépendante des autres dents. Dans le cas où l'une d'elles vient à se tordre au contact de la terre, la dent suivante reste dans le prolongement de la partie interne du second flanc sans être entraînée dans un mouvement de pliage non souhaité.
- La portion externe présente une hauteur comprise entre 45 % et 70 % d'une hauteur totale du second flanc. La portion externe pénètre ainsi en profondeur dans la terre. L'émiettement de la terre est plus efficace.
- La portion externe présente un profil qui s'affine selon une direction radiale orientée de l'intérieur vers l'extérieur. La portion externe présente une meilleure tenue en fonctionnement grâce à une base large tandis que l'extrémité fine pénètre plus facilement dans la terre. Lors de la pénétration, la terre est écartée de part et d'autre de la partie externe en glissant le long des surfaces latérales. Ce fonctionnement est particulièrement avantageux pour refermer un sillon.
- Le second flanc porte une surface latérale orientée vers l'extérieur du pneumatique et sensiblement continue entre la portion interne et la portion externe. Le maintien de l'alignement de la portion externe avec la portion interne en fonctionnement est amélioré. La continuité permet une meilleure répartition des contraintes dans le second flanc. L'absence d'irrégularité limite les concentrations de contraintes et l'apparition d'une zone d'initiation de déformation lors de la compression. En outre, la terre glisse mieux le long de la surface latérale sans s'y accrocher.
- Le premier flanc et la bande de roulement comprennent un élastomère et le second flanc comprend un élastomère, un élastomère thermoplastique et/ou un thermoplastique de dureté supérieure à celle de l'élastomère du premier flanc et de la bande de roulement. La différence de composition et de dureté accentue la différence de comportement dynamique entre la partie externe et le reste du pneumatique. Cela augmente les performances de la partie externe du second flanc pour la pénétration de la terre tandis que la bande de roulement et le premier flanc évacuent plus facilement la terre qui tend à s'accumuler sur les surfaces extérieures du pneumatique.
- Le pneumatique comprend un élastomère de dureté Shore A comprise entre 63 et 70. Une telle plage de dureté a permis d'obtenir de bonnes performances sur des terrains réputés impossibles à travailler sans travail de la terre préalable. En particulier, des terrains hétérogènes comprenant des portions sèches et des portions humides peuvent être travaillés par un même pneumatique au cours d'une même opération.
- Le premier flanc et la bande de roulement comprennent un élastomère de dureté Shore A comprise entre 50 et 65 et le second flanc comprend un élastomère de dureté Shore A comprise entre 70 et 90. Une telle différence de dureté entre les différentes parties d'un pneumatique est plus spécifiquement adaptée aux fonctions propres de chacune des parties, c'est-à-dire la pénétration de la terre d'une part, et l'auto-nettoyage et le maintien de l'orientation de la portion externe d'autre part.
- La semelle, la bande de roulement et la paire de flancs définissent conjointement un espace intérieur. Le pneumatique comprend en outre une ouverture mettant en communication fluidique l'espace intérieur avec l'extérieur. Un tel pneumatique, ni gonflé, ni gonflable, présente une meilleure souplesse pour le nettoyage des surfaces extérieures sans que cela nuise à la capacité de pénétration de la portion externe.

D'autres caractéristiques, détails et avantages de l'invention apparaîtront à la lecture de la description détaillée ci-après, et des dessins annexés, sur lesquels :
- la figure 1 montre une vue en perspective d'une roue équipée d'un pneumatique selon l'invention ;
- la figure 2 montre une vue éclatée et en perspective de la roue de la figure 1 ;
- la figure 3 montre une vue éclatée de côté de la roue de la figure 1 ;
- la figure 4 montre une vue de côté de la roue de la figure 1 ;
- la figure 5 montre une vue en coupe selon le double segment V-V de la figure 4 ;
- la figure 6 montre une vue de détail de la figure 5 ;
- les figures 7 et 8 montrent chacune une vue de face d'une paire de roues similaires à celle des figures 1 à 6 en fonctionnement dans deux modes de réalisation d'un montage en « V » ; et
- la figure 9 est une vue similaire à la figure 5 sur laquelle sont référencées certaines dimensions.

Les dessins et la description ci-après contiennent, pour l'essentiel, des éléments de caractère certain. Ils pourront donc non seulement servir à mieux faire comprendre la présente invention, mais aussi contribuer à sa définition, le cas échéant. Il est relevé que des éléments comme la géométrie de profil des pneumatiques sont difficiles à définir complètement, autrement que par le dessin.

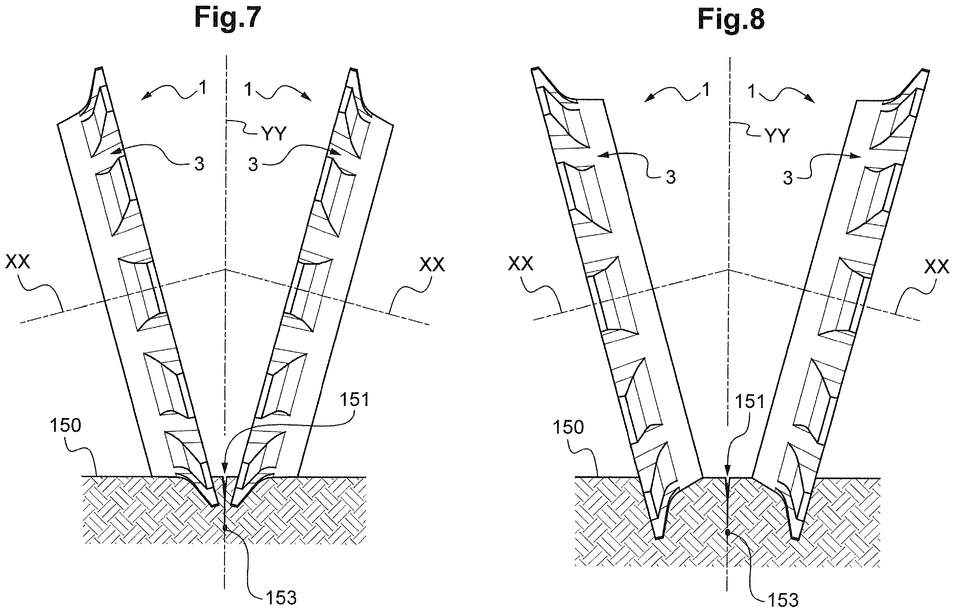

Dans la suite, on décrit la roue 1 en utilisant des termes tels que hauteur, latéral, côté, haut, bas, droite et gauche en accord avec une orientation de la roue dans laquelle l'axe de rotation XX représente la direction latérale, horizontale. Néanmoins, et comme cela sera décrit par exemple en référence aux figures 7 et 8, la roue peut être utilisée dans des conditions dans lesquelles cet axe de rotation XX n'est pas parallèle au sol, n'est pas horizontal et/ou n'est pas perpendiculaire à une direction d'avance de la roue.

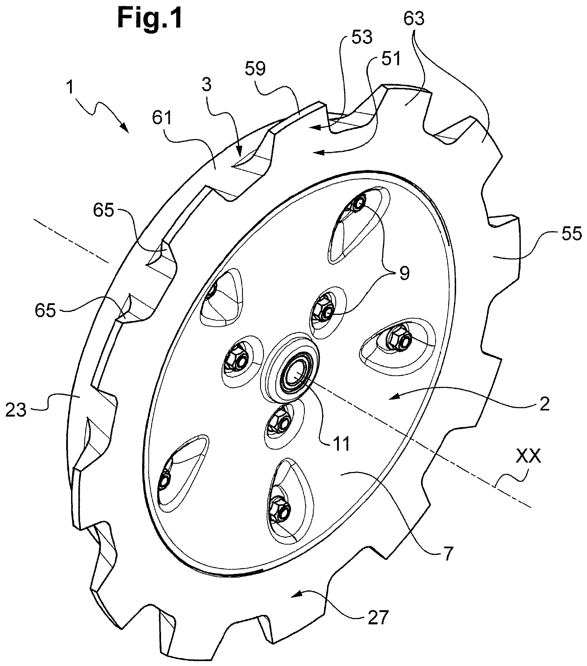

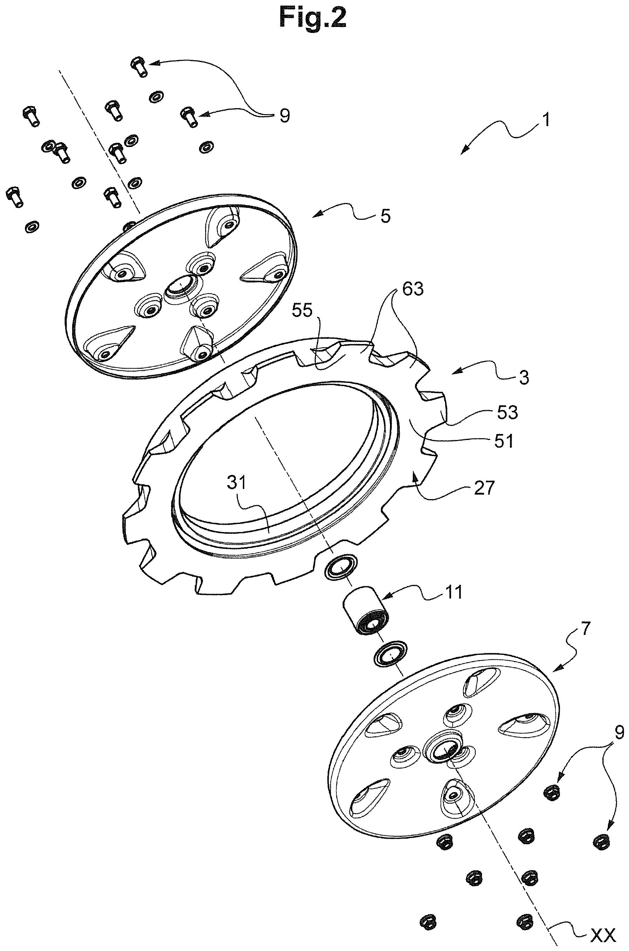

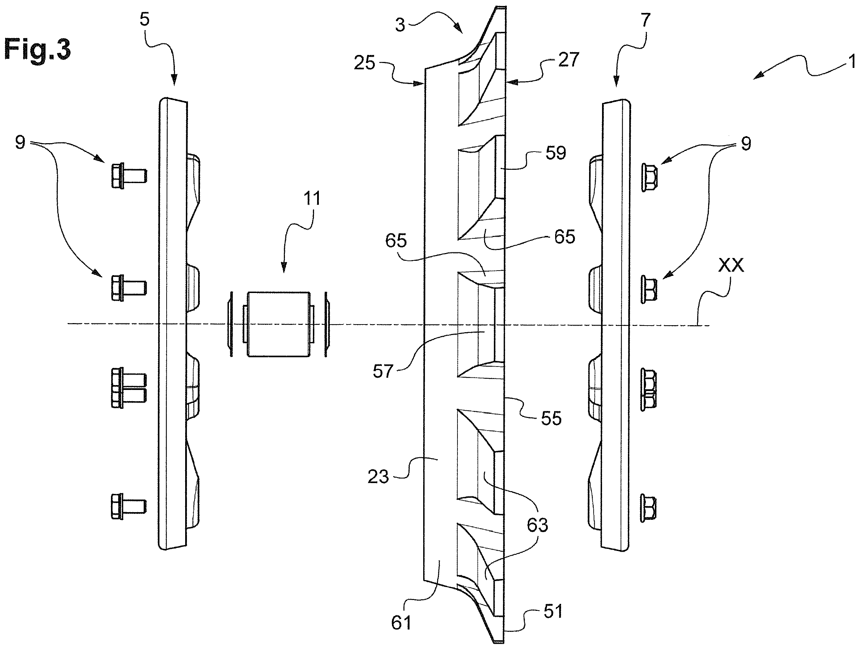

Les figures 1 à 4 représentent un outil agricole sous la forme d'une roue 1. La roue 1 comprend un pneumatique 3, une paire de flasques 5, 7, des fixations 9 et un ensemble de roulement 11. La roue 1 présente un axe de rotation référencé XX. La roue 1 présente un plan médian perpendiculaire à l'axe de rotation XX.

Dans l'exemple décrit ici, les deux flasques 5 et 7 sont similaires et symétriques l'un de l'autre par rapport au plan médian de la roue 1. Chaque flasque 5, 7 présente une forme générale de disque avec une face intérieure et une face extérieure.

Chacun des flasques 5, 7 présente une ouverture centrale qui le traverse, de la face extérieure à la face intérieure. L'ouverture présente un contour sensiblement circulaire. Le contour de l'ouverture centrale fait saillie de la face extérieure. Chacun des flasques 5, 7 présente des passages traversants, entre la face intérieure et la face extérieure pour les fixations 9. Les contours des passages traversants font saillie de la face intérieure.

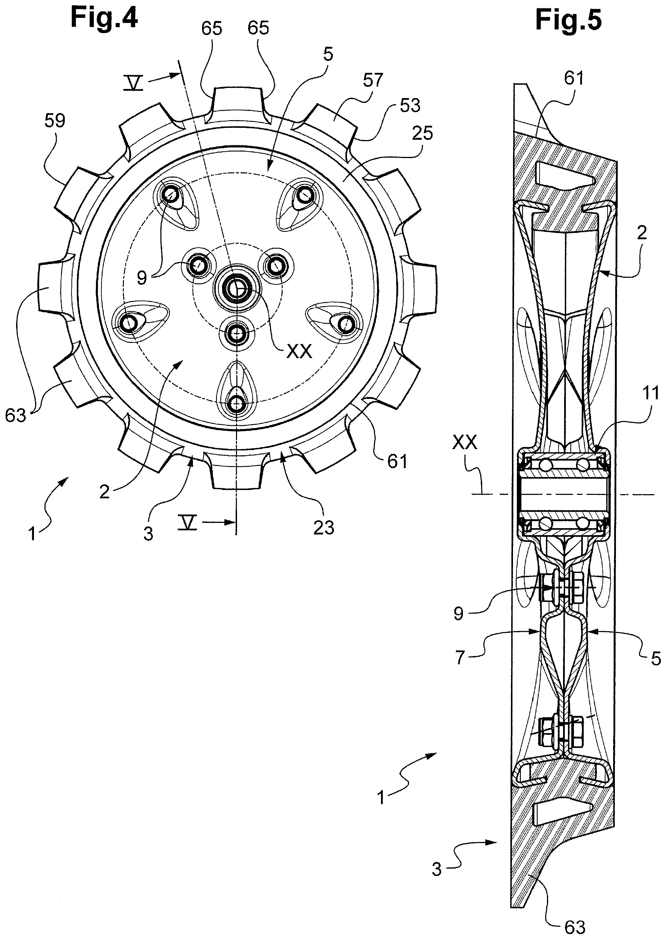

Dans un état assemblé, les faces intérieures des flasques 5, 7 sont montés l'un contre l'autre. Comme cela apparaît en figure 5, les contours des passages traversants de l'un des flasques 5; 7 vient en appui contre les contours correspondants des passages traversants de l'autre de ces flasques 5, 7. Les ouvertures centrales des flasques 5, 7 sont alignées selon l'axe de rotation XX.

Les deux flasques 5, 7 sont maintenus ensemble au moyen des fixations 9 disposées dans les passages prévus à cet effet. Ici, les fixations 9 comprennent des couples vis-écrou. La tête de la vis et l'écrou correspondant sont en appui contre la face extérieure de l'un et l'autre des flasques 5, 7, sur le contour des passages traversants. L'ensemble formé par les deux flasques 5, 7, et les fixations 9 peut être vu comme une partie au moins d'un corps de roue 2.

Le corps de roue 2 présente une ouverture traversante centrée sur l'axe de rotation XX. Les parties du corps de roue 2 entourant l'ouverture forment un moyeu de la roue 1. Cette ouverture est conformée en un logement ouvert apte à recevoir l'ensemble de roulement 11.

Chacun des contours des ouvertures centrales des flasque 5, 7 est conformé en un rebord. Chacun de ces rebords forme une butée axiale pour l'ensemble de roulement 11 de manière à limiter son coulissement selon la direction axiale XX et à le maintenir entre les deux flasques 5, 7. Ici, le logement prévu pour accueillir l'ensemble de roulement 11 est adapté pour loger un ensemble de roulement 11, ou bloc de roulement, connu en tant que tel. L'ensemble de roulement 11 se présente sous la forme d'une cartouche prête à être installée dans le corps de roue 2, lors de l'assemblage des flasques 5, 7 l'un avec l'autre.

L'ensemble de roulement 11 présente un alésage axé sur l'axe de rotation XX et débouchant de chaque côté du corps de roue 2. L'alésage de l'ensemble de roulement 11 est agencé pour être enfilé sur un essieu de machine agricole.

Chaque flasque 5, 7 présente un rebord périphérique agencé pour venir au contact d'une partie du pneumatique 3. Ici, le rebord prend la forme d'une aile annulaire repliée. Chaque rebord, vu en coupe transversale, présente une forme de crochet ouvert vers la face intérieure. À l'état assemblé, les flasques 5, 7 maintiennent entre eux une partie du pneumatique 3 par l'intermédiaire de leur rebord périphérique respectif. Vus en section transversale, les crochets se referment l'un vers l'autre à l'image d'une mâchoire pour enserrer une partie du pneumatique 3.

Ici, les flasques 5, 7 sont obtenus par emboutissage d'une plaque métallique.

Le pneumatique 3 présente une forme généralement annulaire centrée sur l'axe de rotation XX. Le pneumatique 3 comprend une semelle 21, une bande de roulement 23 et une paire de flancs 25, 27. Les flancs 25, 27 relient la semelle 21 à la bande de roulement 23.

La semelle 21, la bande de roulement 23 et les flancs 25, 27 définissent conjointement un espace libre 29. L'espace libre 29 est de forme générale annulaire et continu dans la circonférence du pneumatique 3. Ici, une ouverture met en communication fluidique l'espace libre 29 avec l'extérieur. Une telle ouverture est par exemple obtenue en disposant une aiguille au travers de la semelle 21 au cours du moulage du pneumatique 3. Grâce à cette ouverture, le pneumatique 3 n'est ni gonflable, ni gonflé. Le caractère non gonflé du pneumatique 3 permet de faciliter la déformation du premier flanc 25 et de la semelle 23. De telles déformations au cours du roulage du pneumatique 3 améliorent le décollage de la terre qui peut s'accumuler sur les surfaces extérieures du pneumatique 3. L'ouverture mettant en communication l'espace intérieur 29 avec l'extérieur du pneumatique 3 n'est pas visible sur les figures.

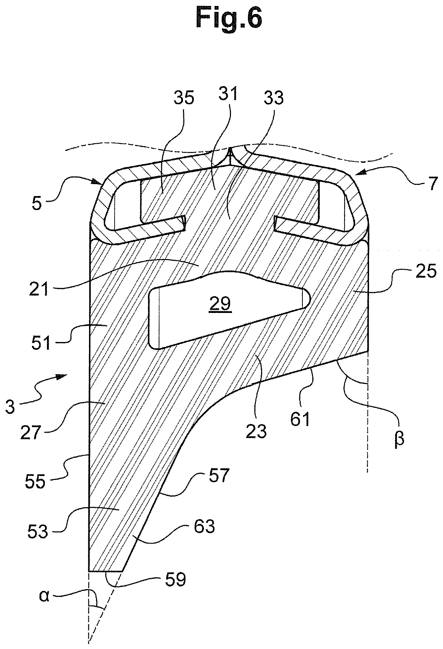

Dans l'exemple décrit ici, le pneumatique 3 comprend en outre un talon 31. Vu selon une coupe transversale telle que représentée aux figures 5 et 6, le talon 31 forme une saillie de la semelle 21 orientée radialement vers l'intérieur du pneumatique 3. Le talon 31 comprend un étranglement 33 à proximité de la semelle 21. L'étranglement 33 se prolonge par une portion élargie 35 en direction du centre du pneumatique 3. Autrement dit, le talon 31 présente un profil en forme de « champignon ». Le talon 31 est agencé en correspondance de forme du corps de roue 2, et en particulier en correspondance de forme des rebords périphériques des flasques 5, 7. Comme cela est visible en figure 6, lors du montage des flasques 5, 7 l'un sur l'autre, les rebords périphériques des flasques 5, 7 en forme de crochets viennent enserrer l'étranglement 33 du talon 31. Le pneumatique 3 est alors maintenu par rapport aux flasques 5, 7. Une telle coopération évite une séparation du pneumatique 3 par rapport aux flasques 5, 7, notamment selon une direction radiale.

Dans des variantes, le pneumatique 3 est dépourvu de talon 31. Le corps de roue 2 comprend une surface périphérique sensiblement cylindrique, ou jante, autour de laquelle la semelle 21 du pneumatique 5 vient s'enfiler. Le corps de roue 2 peut présenter un rebord annulaire faisant saillie de la jante de chaque côté du corps de roue 2. De tels rebords annulaires s'opposent au coulissement du pneumatique 3 autour de la jante selon la direction de l'axe de rotation XX. Le corps de roue 2 peut être obtenu par assemblage de plusieurs pièces tel que des flasques ou être formé d'une seule pièce.

Il est maintenant fait référence aux figures 5 et 6 sur lesquelles la section vue en coupe transversale du pneumatique 3 est visible. La roue 1 représentée aux figures 5 et 6 est en état non chargé. Par non chargé on entend ici libéré de contraintes mécaniques extérieures, et notamment de celles générées par le poids de la roue et/ou de la machine agricole sur le sol. Le pneumatique 3 est dans un état non déformé. Le pneumatique 3 est sensiblement non contraint.

Le premier flanc 25 s'étend de la semelle 21 à la bande de roulement 23. Le second flanc 27 comprend une portion interne 51 qui s'étend de la semelle 21 à la bande de roulement 23 et une portion externe 53 en saillie de la bande de roulement 23. Vue en section transversale, la portion externe 53 est sensiblement dans le prolongement de la partie interne 51 selon une direction radiale.

La semelle 21 et son talon 31 présentent une symétrie selon le plan médian de la roue 1. Vus en coupe transversale, le profil de la semelle 21 et le profil de la portion élargie 35 du talon 31 sont, ici, conformés en chevrons. Autrement dit, la semelle 21 et la portion élargie 35 du talon 31 présentent une forme généralement annulaire, non strictement cylindrique. Les deux moitiés latérales de la semelle 21, respectivement de la portion élargie 35 du talon 31, sont sensiblement tronconiques. Ici, le diamètre de la semelle 21, respectivement de la portion élargie 35 du talon 31, croît de manière sensiblement continue depuis sa partie centrale jusqu'en l'une et l'autre de ses extrémités latérales.

Outre les formes de crochet, les rebords périphériques des flasques 5, 7 présentent une correspondance de forme avec les formes de chevrons de la semelle 21 et du talon 31. Les rebords périphériques des flasques 5, 7 forment un siège pour le pneumatique 3. La correspondance de forme limite encore le coulissement accidentel du pneumatique 3 selon la direction de l'axe de rotation X autour du corps de roue 2. Ainsi, le maintien du pneumatique 3 est amélioré au cours du fonctionnement. Le risque que les rebords périphériques des flasques 5, 7 viennent détériorer le talon 31, voire cisailler l'étranglement 33, est réduit. Dans des variantes, la semelle 21 et/ou la portion élargie 35 du talon 31 sont de forme sensiblement cylindrique.

Selon le plan médian de la roue 1, le pneumatique 5 présente une asymétrie. Ici, le premier flanc 25 présente une hauteur selon la direction radiale inférieure à la hauteur de la portion interne 51 du second flanc 27. La bande de roulement 23 relie une extrémité radiale du premier flanc 25 à une extrémité radiale de la portion interne 51 du second flanc 27. La bande de roulement 23 présente une forme générale tronconique dont le sommet est situé au-delà du premier flanc 25. La bande de roulement 23 porte une surface extérieure 61, opposée à l'espace libre 29. Vue en section transversale, la bande de roulement 23 présente un profil incliné d'un angle non nul par rapport à l'axe de rotation XX. Ainsi, le diamètre de la surface périphérique 61 augmente depuis le premier flanc 25 en direction du second flanc 27. Vue en section transversale, la bande de roulement 23 forme un angle β (Béta) avec un plan radial. L'angle β est mesuré, sur une coupe transversale, entre la surface extérieure 61 et une droite perpendiculaire à l'axe de rotation XX passant par le premier flanc 25, comme cela est représenté en figure 6. L'angle β est compris entre 0° et 90°.

La portion externe 53 du second flanc 27 est disposée sensiblement dans le prolongement radial de la portion interne 51 du second flanc 27. La portion externe 53 peut être vue comme une crête annulaire, ou une couronne, en saillie de la bande de roulement 23 et sensiblement coplanaire avec la portion interne 51 du second flanc 27.

Dans l'exemple décrit ici, le second flanc 27 porte une surface latérale 55 orientée vers l'extérieur du pneumatique 3. La surface latérale 55 est sensiblement continue entre la portion interne 51 et la portion externe 53. Ici, la surface latérale 55 est sensiblement plane et sensiblement à la perpendiculaire de l'axe de rotation XX. Une telle continuité facilite la pénétration de la portion externe 53 dans la terre. L'absence d'irrégularité limite les risques d'accumulation de terre collée. D'un point de vue dynamique, la régularité de la surface latérale 55 limite les risques d'apparition d'une zone d'initiation de pliage du pneumatique 3 sous contrainte.

Dans l'exemple décrit ici, la portion externe 53 du second flanc 27 porte une surface latérale 57 opposée à la surface latérale 55 et orientée vers le premier flanc 25. La surface latérale 57 présente une forme générale tronconique dont le sommet est situé au-delà de la surface latérale 57, du côté du premier flanc 25. Ainsi, le diamètre de la surface latérale 57 augmente depuis le premier flanc 25 en direction de la surface latérale extérieure 55. Vue en section transversale, la surface latérale 57 présente un profil incliné d'un angle non nul par rapport à un plan radial. Vue en section transversale, la surface latérale 57 forme un angle α (Alpha) avec un plan radial. L'angle α est mesuré, sur une coupe transversale, entre la surface latérale 57 et une droite perpendiculaire à l'axe de rotation XX passant par le second flanc 27, comme cela est représenté en figure 6. L'angle α est compris entre 0° et 90°. Dans le cas d'une surface latérale extérieure 55 perpendiculaire à l'axe de rotation XX, l'angle α correspondant également à l'angle entre les surfaces latérales opposées 55, 57 de la portion externe 53 du second flanc 27.

La surface latérale 57 de la portion externe 53 du second flanc 27 est reliée à la surface périphérique 61 de la bande de roulement 23 par un congé de raccordement. Autrement dit, l'angle entre la surface latérale 57 de la portion extérieure 53 du second flanc 27 et la surface 61 de la bande de roulement 23 est sensiblement arrondi. Ceci permet de limiter les risques d'apparition d'une zone d'initiation ou d'amorce de pliage. En fonctionnement, la surface périphérique 61 vient au contact du sol 150 alors que la portion externe 53 est déjà enfoncée dans le sol 150. La surface périphérique 61 forme une surface d'arrêt de l'enfoncement de la portion externe 53, de sorte que la portion externe 53 travaille à une profondeur sensiblement constante, en suivant les dénivelés du sol 150. La surface périphérique 61 peut remplacer une roue de jauge annexe.

Pour définir les dimensions, notamment d'après la figure 8, le congé de raccordement est considéré comme appartenant la surface latérale 57 de la portion externe 53 du second flanc 27. Par conséquent, la largeur de la base de la portion externe 53 représente, ici, environ la moitié de la largeur 104 du pneumatique 3.

Les orientations de la surface latérale 55 et de la surface latérale 57 confèrent à la portion externe 53 un profil en forme de pointe. L'extrémité radiale de la portion externe 53 est écrêtée. Autrement dit, la portion externe 53 présente une surface périphérique 59. La surface périphérique 59 est ici sensiblement cylindrique. Vue de profil, la surface périphérique 59 est sensiblement parallèle à l'axe de rotation XX. La surface périphérique 59 présente une largeur 107 selon la direction de l'axe de rotation XX sensiblement inférieure à l'épaisseur moyenne de la portion interne 51 du second flanc 27. De manière générale, la forme du profil de la portion externe 53 est choisie de façon à faciliter la pénétration dans la terre lors du roulage du pneumatique 3.

L'angle α est compris entre 10° et 45°, par exemple ici environ 25°. L'angle β est compris entre 45° et 90°, par exemple ici environ 74°.

La portion externe 53 du second flanc 27 comprend des dents 63. Les dents 63 sont réparties dans la périphérie de la portion externe 53. Comme cela apparaît en partie haute de la figure 5, la portion externe 53 entre les dents 63 comprend une section de hauteur inférieure à celle d'une dent 63. La portion externe 53 du second flanc 27 est donc discontinue selon la circonférence du pneumatique 3. Sur les portions angulaires situées entre deux dents 63, la surface périphérique 61 de la bande de roulement 23 se prolonge sensiblement sur toute la largeur du pneumatique 3 et rejoint la surface latérale extérieure 55. Dans ces portions angulaires, vue de profil, la surface périphérique 61 est droite. Dans des variantes, les portions angulaires du pneumatique 3 entre deux dents 63 présentent une portion externe 53 qui fait saillie par rapport à la surface périphérique 61.

Dans l'exemple décrit ici, les dents 63 sont au nombre de douze et équidistantes les unes des autres. Dans des variantes, le nombre de dents 63 peut être différent. Les dents 63 peuvent être réparties de manière hétérogène le long de la circonférence du pneumatique 3.

Dans l'exemple décrit ici, la portion angulaire occupée par une dent 63 est sensiblement équivalente à la portion angulaire dépourvue de dent et séparant deux dents 63 voisines.

Vues de côté et comme cela est représenté en figure 4, les dents 63 présentent des faces 65 reliant les surfaces latérales 55 et 57 l'une à l'autre. Chaque dent 63 présente deux faces 65 opposées l'une par rapport à l'autre et chacune sensiblement en regard d'une face 65 d'une dent 63 voisine. Les faces 65 d'une dent 63 sont sensiblement le symétrique l'une de l'autre selon un plan radial passant par le milieu de la dent 63. Autrement dit, la forme des faces 65 est indépendante du sens de rotation de la roue 1 en fonctionnement. Dans des variantes, les faces 65 d'une dent 63 sont différentes. Par exemple, l'une des deux faces 65 est une face d'attaque, tandis que l'autre est une face de fuite en fonction du sens de rotation de la roue 1 en fonctionnement.

Ici, les faces 65 sont mutuellement conformées de sorte que, selon la vue de côté représentée en figure 4, la dimension de la dent 63 selon la circonférence s'affine depuis sa base reliée à la bande de roulement 23 jusqu'à son extrémité radiale et à sa surface périphérique 59. Une telle configuration améliore la pénétration des dents 63 dans la terre au cours du roulage du pneumatique 3.

D'un point de vue dynamique, la discontinuité de la portion externe 53 du second flanc 27, ici une configuration en un ensemble de dents 63, rend sensiblement indépendantes les portions angulaires de la portion externe 53 du second flanc 27. Au cours du roulage du pneumatique 3, les mouvements et déformations d'une dent 63 sont sensiblement indépendants des mouvements et des déformations des dents 63 voisines.

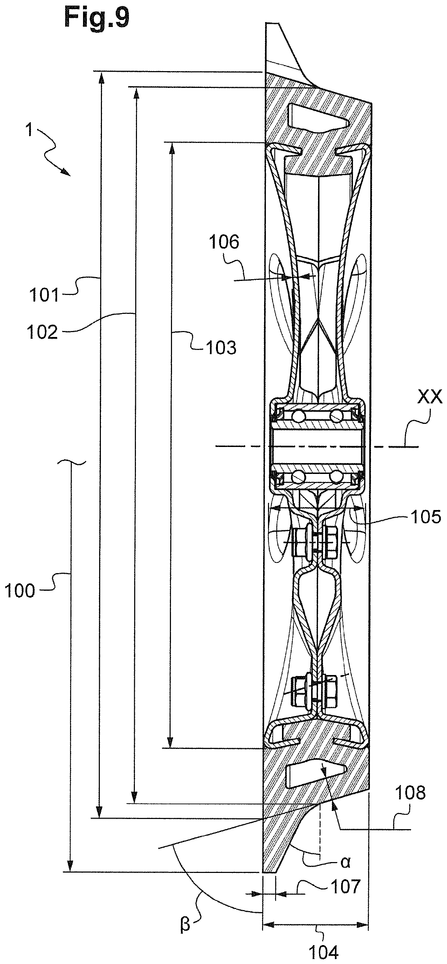

Il est maintenant fait référence à la figure 9 pour définir des dimensions du pneumatique 3. Sur la figure 9, représentant le pneumatique 3 à l'état monté sur le corps de roue 2 et au repos, les dimensions suivantes sont référencées :
- Le diamètre maximal 100 du pneumatique 3, pris entre les surfaces périphériques 59 de dents 63 diamétralement opposées. Le diamètre maximal 100 est compris entre 300 et 600 millimètres, par exemple environ 400 millimètres.
- Le diamètre maximal 101 du pneumatique 3, pris entre des portions angulaires dépourvues de dents 63 et diamétralement opposées. Le diamètre 101 est compris entre 260 et 525 millimètres, par exemple environ 350 millimètres.
- Le diamètre maximal 102 du pneumatique 3 hors portion externe 53. On notera que cette dimension est prise à la base de la portion externe 53, c'est-à-dire ici sensiblement à mi-largeur du pneumatique 3. Le diamètre 102 est compris entre 250 et 500 millimètres, par exemple environ 333 millimètres.
- Le diamètre interne 103 du pneumatique 3. On notera que cette dimension est prise à la surface de la semelle 21 orientée radialement vers l'intérieur, hors talon 31, et à une extrémité latérale de la section du pneumatique 3. Le diamètre interne 103 du pneumatique 3 à l'état monté correspond sensiblement au diamètre extérieur du corps de roue 2. Le diamètre interne 103 est compris entre 215 et 430 millimètres, par exemple environ 284 millimètres.
- La largeur extérieure 104 du pneumatique 3. La largeur extérieure 104 est comprise entre 20 et 150 millimètres, par exemple environ 50 millimètres.
- La largeur 105 du moyeu du corps de roue 2. La largeur 105 est inférieure à la largeur extérieure 104 du pneumatique, soit ici environ 45 millimètres.
- L'épaisseur moyenne 106 de la plaque formant un flasque 5, 7. L'épaisseur moyenne 106 présente, ici, une valeur nominale de 2,5 millimètres.
- La largeur 107 de la surface périphérique 59 des dents 63. La largeur 107 est comprise entre 3 et 20 millimètres, par exemple environ 6 millimètres.
- L'épaisseur 108 de la bande de roulement 23. L'épaisseur 108 est mesurée hors des zones de raccordement avec les autres parties du pneumatique 5. Ici, les épaisseurs de la bande de roulement 23, de la semelle 21 hors talon 31, du premier flanc 25 et de la portion interne 51 du second flanc 27 sont sensiblement équivalentes. L'épaisseur 108 est comprise entre 4 et 15 millimètres, par exemple environ 10,5 millimètres.
- La hauteur de la portion externe 53 se déduit de la différence entre le diamètre maximal 100 et le diamètre maximal 102. La hauteur de la portion externe 53 est par exemple, ici, d'environ 33,5 millimètres. La hauteur de la portion externe 53 représente généralement entre 45 % et 70 % de la hauteur totale du second flanc 27 qui se déduit elle-même de la différence entre le diamètre maximal 100 et le diamètre interne 103. Par exemple ici, la hauteur totale du second flanc 27 est d'environ 58 millimètres, soit une hauteur de la portion externe 53 d'environ 58 % de la hauteur totale du second flanc 27.
- La hauteur des dents 63 se déduit de la différence entre le diamètre maximal 100 et le diamètre maximal 101. La hauteur des dents 63 est par exemple, ici, d'environ 25 millimètres.

Les exemples de dimensions précitées sont combinés dans le mode de réalisation représenté en figure 5. Dans d'autres modes de réalisation, les dimensions sont conjointement sélectionnées tout en préservant le comportement dynamique du pneumatique 3 tel que décrit ensuite. Par exemple, les proportions entre les dimensions précitées sont sensiblement égales à celles du mode de réalisation de la figure 5.

Le premier flanc 25 et la bande de roulement 23 sont agencés de manière à maintenir conjointement la portion externe 53 du second flanc 27 dans le prolongement de la portion interne 51. La forme et la composition du premier flanc 25 et de la bande de roulement 23 sont conjointement adaptées de manière à assurer un maintien selon une direction axiale XX de la portion externe 53 du second flanc 27. Sous charge, la portion externe 53 du second flanc 27 vient au contact du sol 150 et subit des contraintes importantes. Les contraintes sont essentiellement orientées selon des directions radiales. Le maintien assuré conjointement par le premier flanc 25 et la bande de roulement 23 s'oppose au fléchissement, ou flambement, de la portion externe 53 du second flanc 27. La portion externe 53 du second flanc 27 est conformée pour présenter une raideur supérieure à celle de la terre, de sorte que la portion externe 53 s'enfonce sensiblement selon une direction radiale dans le sol 150. Néanmoins, lors du passage sur des portions essentiellement dures ou des cailloux, la portion externe 53 se déforme élastiquement sans rupture. Après incident, elle retrouve son orientation normale. Contrairement aux outils métalliques, aucune opération de maintenance n'est nécessaire.

Ici, la portion externe 53 présente un comportement dynamique rigide, tandis que le premier flanc 25 et la bande de roulement 23 présente un comportement dynamique souple. Ainsi, le premier flanc 25 et la bande de roulement 23 peuvent présenter une déformation importante selon une direction radiale, sous l'effet de la compression, tout en maintenant la portion externe 53 selon une direction axiale. La portion externe 53, quant à elle, présente une faible déformation radiale sous l'effet de la compression. En fonctionnement, les dents 63 de la portion externe 53 permettent de concentrer la force de compression sur une petite surface, correspondant sensiblement à la surface périphérique 59. La pénétration dans le sol 150 est facilitée.

Dans l'exemple décrit ici, le pneumatique 3 est réalisé d'un seul tenant. Le pneumatique 3 est réalisé à base d'élastomère, par exemple du caoutchouc ou du polyuréthane. Dans l'exemple décrit ici, le pneumatique 3 est réalisé à base d'un unique élastomère. L'élastomère présente une dureté Shore A comprise entre 63 et 70, par exemple 65 Shore.

Dans des variantes, le pneumatique 3 est réalisé à base d'au moins deux matériaux de duretés différentes l'une de l'autre. Dans ce cas, le pneumatique 3 est réalisé par un moulage ou extrusion de deux pièces distinctes puis par leur assemblage. Par exemple, le premier flanc 25 et la bande de roulement 23 peuvent être réalisés à base d'un élastomère tandis que le second flanc 27 ou la portion externe 53 est réalisé à base d'un autre élastomère, d'un élastomère thermoplastique et/ou d'un thermoplastique.

Dans un mode de réalisation, le premier flanc 25 et la bande de roulement 23 comprennent un élastomère de dureté Shore A comprise entre 50 et 65 par exemple 55 Shore. Le second flanc 27 comprend un élastomère de dureté Shore A comprise entre 70 et 90, par exemple 80 Shore. L'utilisation d'un pneumatique 3 dont le second flanc 27 présente une dureté différente de celle de la bande de roulement 23 et du premier flanc 25 permet d'accentuer la différence de comportement dynamique entre les deux parties du pneumatique 3. Notamment, la portion externe 53 est rendue plus rigide, tandis que le premier flanc 25 et la bande de roulement 23 sont rendus plus souples. La combinaison de la structure et de la composition des différentes parties du pneumatique 3 est affinée en fonction du comportement dynamique du pneumatique 3 souhaité. Par exemple, des combinaisons spécifiques peuvent être prévues en fonction de la qualité de la terre à travailler. Par conséquent, les combinaisons de structures et de compositions peuvent être adaptées en fonction du climat et des zones géographiques dans lesquelles il est prévu d'utiliser les roues 1.

En fonctionnement, la roue 1 peut être montée sur un essieu dont l'axe principal est sensiblement horizontal et perpendiculaire à la direction d'avance de la machine agricole. Une roue 1 peut être utilisée seule ou en combinaison de roues 1 similaires.

En variante, une roue 1, seule ou en combinaison d'autres roues 1, peut être montée sur un essieu dont l'axe principal est incliné par rapport à l'horizontale et/ou non perpendiculaire à la direction d'avance de la machine agricole. Les figures 7 et 8 représentent des configurations dans lesquelles deux roues 1 travaillent conjointement et dont les axes de rotations sont inclinés par rapport à l'horizontale.

Les figures 7 et 8 représentent chacun un outil agricole équipé d'une paire de roues 1 similaires à celle décrite jusqu'ici. Un tel outil peut former, par exemple, l'outil de queue d'un semoir. La structure porteuse des roues 1 n'est pas représentée. La paire de roues 1 présente, vue de face, une configuration en « V ». Une telle configuration permet, par exemple, de refermer un sillon 151 au fond duquel a été déposée une graine 153. En roulant à côté du sillon 151, la terre tend à être chassée latéralement pour refermer le sillon 151. Une roue 1 seule pourrait, en variante, suffire à refermer le sillon 151. Ici, deux roues 1 roulent de part et d'autre du sillon 151. Les deux roues 1 sont le symétrique l'une de l'autre selon un plan médian YY vertical et passant par le sillon 151. Les roues 1 ne sont pas disposées à la verticale mais au contraire orientées en partie vers le sol 150. Leur axe de rotation XX respectif est sensiblement incliné par rapport à l'horizontale. Ils forment, par exemple, un angle compris entre 5° et 15° avec l'horizontale. Ainsi, la combinaison de l'inclinaison des roues 1 et des portions externes 53 permet de fermer le sillon 151 en ramenant la terre simultanément depuis chaque côté du sillon 151. En outre, les empreintes formées par les dents 63 dans la terre peuvent constituer des réservoirs qui se remplissent d'eau, par la pluie ou un arrosage. Ceci permet, par exemple, d'améliorer la continuité de l'alimentation en eau de la graine 153 entre deux épisodes pluvieux.

Dans la configuration représentée en figure 7, les côtés portant la portion externe 53 de chacune des roues 1 se font sensiblement face et sont au centre de la configuration en « V ». Autrement dit, les deux roues 1 sont mutuellement agencées en symétrique l'une de l'autre par rapport au plan médian YY et de sorte que les seconds flancs 27 de chacune des roues 1 soit disposés du côté du plan médian YY. Un tel montage permet d'appliquer aux flancs du sillon 151 une force orientée sensiblement à la verticale depuis le dessus de la graine 153. Les parois du sillon 151 sont émiettées et viennent recouvrir la graine 153. Ainsi, même en cas de vent ou de pluie en abondance, les risques que la graine 153 soit emportée hors du sillon 151 sont limités.

Dans la configuration représentée en figure 8, les côtés portant la portion externe 53 de chacune des roues 1 sont disposés latéralement vers l'extérieur de la configuration en « V ». Les deux roues 1 sont agencées symétriquement l'une de l'autre par rapport au plan médian YY, de sorte que le premier flanc 25 de chacune des roues 1 soit orienté vers le plan médian YY. Les premiers flancs 25 des roues 1 sont plus éloignés l'un de l'autre que dans le cas de la figure 7. Un tel montage permet d'appliquer aux flancs du sillon 151 deux forces orientées latéralement et de sens opposé l'un à l'autre depuis chaque côté de la graine 153. Le sillon 151 tend alors à être refermé sur lui-même. Là encore, même en cas de vent ou de pluie en abondance, les risques que la graine 153 soit emportée hors du sillon 151 sont limités.

Dans des variantes combinables avec les modes de réalisation des figures 7 et 8, les roues 1 peuvent être montées par paire dans une configuration en « V » vue de dessus. Les roues 1 sont disposées selon un angle non nul par rapport à la direction d'avancée. Leur axe de rotation XX respectif est non perpendiculaire à la direction d'avancée. Le plan des roues forment par exemple un angle compris entre 5° et 15° avec la direction d'avancée. Dans ce cas, l'un des flancs de l'enveloppe 3 pousse la terre. Un tel fonctionnement rappelle le fonctionnement d'une lame de chasse-neige. Une roue 1 seule, par opposition au montage par paire, peut également être inclinée par rapport à la direction d'avancée et/ou par rapport à l'horizontale.

Jusqu'ici, le fonctionnement des pneumatiques selon l'invention a été décrit dans le contexte du fonctionnement d'un semoir. Les roues selon l'invention ne sauraient se limiter à cet usage et peuvent équiper des outils montés sur d'autres types de machines agricoles de travail du sol.

L'invention ne se limite pas aux exemples de pneumatiques décrits ci-avant, seulement à titre d'exemple, mais elle englobe toutes les variantes que pourra envisager l'homme de l'art dans le cadre des revendications ci-après.

## Revendications

1. Pneumatique (3) non gonflable pour outil agricole (1) du type comprenant :
- une semelle (21),
- une bande de roulement (23), et
- une paire de flancs (25, 27) reliant la semelle (21) à la bande de roulement (23), la semelle (21), la bande de roulement (23) et les flancs (25, 27) définissant conjointement un espace libre (29) de forme générale annulaire et continu dans la circonférence du pneumatique (3), tandis qu'une ouverture met en communication fluidique cet espace libre (29) avec l'extérieur,
**caractérisé en ce qu'**un premier de ces flancs (25) s'étend de la semelle (21) à la bande de roulement (23), tandis que le second (27) comprend une portion interne (51) qui s'étend de la semelle (21) à la bande de roulement (23) et une portion externe (53) en saillie de la bande de roulement (23) et agencée pour s'enfoncer dans le sol,
le premier flanc (25) et la bande de roulement (23) étant agencés de manière à maintenir conjointement la portion externe (53) du second flanc (27) dans le prolongement de la portion interne (51).

2. Pneumatique (3) selon la revendication 1, dans lequel la portion externe (53) est rigide tandis que le premier flanc (25) et la bande de roulement (23) sont souples.

3. Pneumatique (3) selon l'une des revendications précédentes, dans lequel la portion externe (53) comprend des dents (63) réparties en sa périphérie.

4. Pneumatique (3) selon l'une des revendications précédentes, dans lequel la portion externe (53) présentent une hauteur comprise entre 45 % et 70 % d'une hauteur totale du second flanc (27).

5. Pneumatique (3) selon l'une des revendications précédentes, dans lequel la portion externe (53) présente un profil qui s'affine selon une direction radiale orientée de l'intérieur vers l'extérieur.

6. Pneumatique (3) selon l'une des revendications précédentes, dans lequel le second flanc (27) porte une surface latérale (55) orientée vers l'extérieur du pneumatique (3) sensiblement continue entre la portion interne (51) et la portion externe (53).

7. Pneumatique (3) selon l'une des revendications précédentes, dans lequel le premier flanc (25) et la bande de roulement (23) comprennent un élastomère et le second flanc (27) comprend un élastomère, un élastomère thermoplastique et/ou un thermoplastique de dureté supérieure à celle de l'élastomère du premier flanc (25) et de la bande de roulement (23).

8. Pneumatique (3) selon l'une des revendications précédentes, comprenant un élastomère de dureté Shore A comprise entre 63 et 70.

9. Pneumatique (3) selon l'une des revendications, dans lequel le premier flanc (25) et la bande de roulement (23) comprennent un élastomère de dureté Shore A comprise entre 50 et 65, et dans lequel le second flanc (27) comprend un élastomère de dureté Shore A comprise entre 70 et 90.

10. Pneumatique (3) selon l'une des revendications précédentes, dans lequel la semelle (21), la bande de roulement (23) et la paire de flancs (25, 27) définissent conjointement un espace intérieur (29), le pneumatique (3) comprenant en outre une ouverture mettant en communication fluidique l'espace intérieur (29) avec l'extérieur.

11. Outil agricole comprenant au moins une roue (1) incluant un corps de roue (2) et un pneumatique (3) selon l'une des revendications précédentes monté autour du corps de roue (2).

12. Outil agricole selon la revendication 11, dans lequel la roue (1) est montée à rotation autour d'un axe (XX), l'axe (XX) étant incliné d'un angle non nul par rapport au sol (150) et/ou incliné d'un angle non droit par rapport à la direction d'avancée de l'outil agricole.

13. Outil agricole selon l'une des revendications 11 et 12 comprenant au moins deux roues (1) incluant chacune un corps de roue (2) et un pneumatique (3) selon l'une des revendications 1 à 10 monté autour du corps de roue (2), chacune des deux roues (1) étant montée à rotation de sorte que son axe de rotation (XX) soit incliné par rapport au sol (150).

14. Outil agricole selon la revendication 13, dans lequel les deux roues (1) sont agencées symétriquement l'une de l'autre par rapport à un plan médian (YY), de telle sorte que les premiers flancs (25) des roues (1) soient orientés vers le plan médian (YY).

15. Outil agricole selon la revendication 13, dans lequel les deux roues (1) sont agencées symétriquement l'une de l'autre par rapport à un plan médian (YY) et de telle sorte que les seconds flancs (27) des roues (1) soient orientés vers le plan médian (YY).

## Patentansprüche

1. Nicht aufblasbarer Reifen (3) für ein landwirtschaftliches Gerät (1), in der Art Folgendes umfassend:
- eine Sohle (21),
- eine Lauffläche (23), und
- ein Flankenpaar (25, 27), das die Sohle (21) mit der Lauffläche (23) verbindet, wobei die Sohle (21), die Lauffläche (23) und die Flanken (25, 27) gemeinsam einen Freiraum (29) in einer allgemeinen ringförmigen und durchgehenden Form am Umfang des Reifens (3) definieren, während eine Öffnung diesen Freiraum (29) in Fluidverbidung mit dem Äußeren versetzt,
**dadurch gekennzeichnet, dass** sich eine erste dieser Flanken (25) von der Sohle (21) zur Lauffläche (23) erstreckt, während die zweite (27) einen inneren Abschnitt (51) umfasst, der sich von der Sohle (21) zur Lauffläche (23) erstreckt, und einen äußeren Abschnitt (53), aus der Lauffläche (23) hervorstehend, und angeordnet, um in den Boden einzusinken,
wobei die erste Flanke (25) und die Lauffläche (23) derart angeordnet sind, um gemeinsam den äußeren Abschnitt (53) der zweiten Flanke (27) in der Verlängerung des inneren Abschnitts (51) zu halten.

2. Reifen (3) nach Anspruch 1, wobei der äußere Abschnitt (53) starr ist, während die erste Flanke (25) und die Lauffläche (23) flexibel sind.

3. Reifen (3) nach einem der vorstehenden Ansprüche, wobei der äußere Abschnitt (53) Zähne (63) umfasst, die über dessen Umfang verteilt sind.

4. Reifen (3) nach einem der vorstehenden Ansprüche, wobei der äußere Abschnitt (53) eine Höhe aufweist, die zwischen 45% und 70% einer Gesamthöhe der zweiten Flanke (27) enthalten ist.

5. Reifen (3) nach einem der vorstehenden Ansprüche, wobei der äußere Abschnitt (53) ein Profil aufweist, das sich in einer radialen, von innen nach außen ausgerichteten Richtung verfeinert.

6. Reifen (3) nach einem der vorstehenden Ansprüche, wobei die zweite Flanke (27) eine Seitenfläche (55) trägt, die nach außerhalb des Reifens (3), im Wesentlichen durchgehend zwischen dem inneren Abschnitt (51) und dem äußeren Abschnitt (53) ausgerichtet ist.

7. Reifen (3) nach einem der vorstehenden Ansprüche, wobei die erste Flanke (25) und die Lauffläche (23) ein Elastomer umfassen und die zweite Flanke (27) ein Elastomer, ein thermoplastisches Elastomer und/ oder ein Thermoplast mit einer größeren Härte als jener des Elastomers der ersten Flanke (25) und der Lauffläche (23) umfasst.

8. Reifen (3) nach einem der vorstehenden Ansprüche, ein Elastomer mit einer Shore-Härte A umfassend, die zwischen 63 und 70 enthalten ist.

9. Reifen (3) nach einem der Ansprüche, wobnei die erste Flanke (25) und die Lauffläche (23) ein Elastomer mit einer Shore-Härte A umfassen, die zwischen 50 und 65 enthalten ist, und wobei die zweite Flanke (27) ein Elastomer mit einer Shore-Härte A umfasst, die zwischen 70 und 90 enthalten ist.

10. Reifen (3) nach einem der vorstehenden Ansprüche, wobei die Sohle (21), die Lauffläche (23) und das Flankenpaar (25, 27) gemeinsam einen Innenraum (29) definieren, wobei der Reifen (3) weiter eine Öffnung umfasst, die den Innenraum (29) in Fluidverbidung mit dem Äußeren versetzt.

11. Landwirtschaftliches Gerät, mindestens ein Rad (1) umfassend, das einen Radkörper (2) und einen Reifen (3) nach einem der vorstehenden Ansprüche beinhaltet, der um den Radkörper (2) herum montiert ist.

12. Landwirtschaftliches Gerät nach Anspruch 11, wobei das Rad (1) um eine Achse (XX) drehend montiert ist, wobei die Achse (XX) um einen Winkel ungleich null in Bezug auf den Boden (150) geneigt ist, und/ oder um einen in Bezug auf die Fortbewegungsrichtung des landwirtschaftlichen Gerätes nicht rechten Winkel geneigt ist.

13. Landwirtschaftliches Gerät nach einem der Ansprüche 11 und 12, mindestens zwei Räder (1) umfassend, die jeweils einen Radkörper (2) und einen Reifen (3) nach einem der Ansprüche 1 bis 10 beinhalten, der um den Radkörper (2) herum montiert ist, wobei jedes der beiden Räder (1) drehend montiert ist, sodass seine Drehachse (XX) in Bezug auf den Boden (150) geneigt ist.

14. Landwirtschaftliches Gerät nach Anspruch 13, wobei die beiden Räder (1) symmetrisch zueinander in Bezug auf eine Mittenebene (YY) angeordnet sind, sodass die ersten Flanken (25) der Räder (1) zur Mittenebene (YY) ausgerichtet sind.

15. Landwirtschaftliches Gerät nach Anspruch 13, wobei die beiden Räder (1) symmetrisch zueinander in Bezug auf eine Mittenebene (YY) angeordnet sind, und derart, dass die zweiten Flanken (27) der Räder (1) zur Mittenebene (YY) ausgerichtet sind.

## Claims

1. Non-inflatable tyre (3) for an agricultural implement (1), of the type comprising:
- a sole (21),
- a tread (23), and
- a pair of sidewalls (25, 27) connecting the sole (21) to the tread (23),
the sole (21), the tread (23) and the sidewalls (25, 27) defining jointly a free space (29) of generally annular shape and continuous in the circumference of the tyre (3), while an opening fluidly connects this free space (29) to the outside,
**characterized in that** a first of these sidewalls (25) extends from the sole (21) to the tread (23), while the second (27) comprises an internal portion (51) which extends from the sole (21) to the tread (23) and an external portion (53) projecting from the tread (23) and arranged to sink into the ground,
the first sidewall (25) and the tread (23) being arranged so as to jointly hold the external portion (53) of the second sidewall (27) in line with the internal portion (51).

2. Tyre (3) according to Claim 1, wherein the external portion (53) is rigid while the first sidewall (25) and the tread (23) are flexible.

3. Tyre (3) according to either of the preceding claims, wherein the external portion (53) comprises teeth (63) distributed around its periphery.

4. Tyre (3) according to one of the preceding claims, wherein the external portion (53) has a height of between 45% and 70% of an overall height of the second sidewall (27).

5. Tyre (3) according to one of the preceding claims, wherein the external portion (53) has a profile which narrows in a radial direction oriented from the inside to the outside.

6. Tyre (3) according to one of the preceding claims, wherein the second sidewall (27) bears a lateral surface (55) that is oriented towards the outside of the tyre (3) and is substantially continuous between the internal portion (51) and the external portion (53).

7. Tyre (3) according to one of the preceding claims, wherein the first sidewall (25) and the tread (23) comprise an elastomer and the second sidewall (27) comprises an elastomer, a thermoplastic elastomer and/or a thermoplastic with a hardness greater than that of the elastomer of the first sidewall (25) and of the tread (23).

8. Tyre (3) according to one of the preceding claims, comprising an elastomer with a Shore A hardness of between 63 and 70.

9. Tyre (3) according to one of the preceding claims, wherein the first sidewall (25) and the tread (23) comprise an elastomer with a Shore A hardness of between 50 and 65, and wherein the second sidewall (27) comprises an elastomer with a Shore A hardness of between 70 and 90.

10. Tyre (3) according to one of the preceding claims, wherein the sole (21), the tread (23) and the pair of sidewalls (25, 27) jointly define an interior space (29), the tyre (3) also comprising an opening that places the interior space (29) in fluidic communication with the outside.

11. Agricultural implement comprising at least one wheel (1) that includes a wheel body (2) and a tyre (3) according to one of the preceding claims mounted around the wheel body (2).

12. Agricultural implement according to Claim 11, wherein the wheel (1) is mounted so as to rotate about an axis (XX), the axis (XX) being inclined at a non-zero angle with respect to the ground (150) and/or inclined at a non-right angle with respect to the direction of forward travel of the agricultural implement.

13. Agricultural implement according to either of Claims 11 and 12, comprising at least two wheels (1) that each include a wheel body (2) and a tyre (3) according to one of Claims 1 to 10 mounted around the wheel body (2), each of the two wheels (1) being mounted so as to rotate in such a way that its axis of rotation (XX) is inclined with respect to the ground (150).

14. Agricultural implement according to Claim 13, wherein the two wheels (1) are arranged symmetrically with respect to one another about a median plane (YY) such that the first sidewalls (25) of the wheels (1) are oriented towards the median plane (YY).

15. Agricultural implement according to Claim 13, wherein the two wheels (1) are arranged symmetrically with respect to one another about a median plane (YY) and such that the second sidewalls (27) of the wheels (1) are oriented towards the median plane (YY).
